# FASCICULE DE BREVET EUROPEEN

(11) **EP 1 032 545 B1**
(45) Date de publication et mention de la délivrance du brevet: **15.01.2003**
(21) Numéro de dépôt: 98955677.4
(22) Date de dépôt: 17.11.1998
(51) Int. Cl.: C04B 28/02

(54) **AGENT MODIFICATEUR D'HYDRATATION POUR MORTIER OU BETON A RETRAIT LIMITE**
HYDRATATIONSMODIFIZIERUNGSMITTEL FÜR MÖRTEL ODER BETON MIT LIMITIERTER SCHWINDUNG
HYDRATION MODIFYING AGENT FOR MORTAR OR CONCRETE WITH LIMITED SHRINKAGE

(30) Priorité: 17.11.1997 FR 9714593
(43) Date de publication de la demande: 06.09.2000
(73) Titulaire: VICAT, 92095 Paris La Défense Cedex (FR)
(72) Inventeur: CECCALDI, Jean-Dominique, F-26220 Dieulefit (FR); IZORET, Laurent, F-69001 Lyon (FR)
(74) Mandataire: Guerre, Dominique
(86) Numéro de dépôt international: FR9802451
(87) Numéro de publication internationale: WO99025664

(56) Documents cités:
- EP-A- 0 238 858
- EP-A- 0 350 904
- EP-A- 0 403 974
- EP-A- 0 518 156
- WO-A-96/27565
- US-A- 4 447 269
- CHEMICAL ABSTRACTS, vol. 111, no. 22, 27 novembre 1989 Columbus, Ohio, US; abstract no. 197133d, I. FEUER: "floor-equalizing dry self-spreading mortar with decreased shrinkage" XP000061179 & HU 31 035 A
- CHEMICAL ABSTRACTS, vol. 111, no. 22, 27 novembre 1989 Columbus, Ohio, US; abstract no. 200687b, ANDO YUTAKA: "concrete compositions for centrifugal molding" XP000156470 & JP 01 103944 A
- CHEMICAL ABSTRACTS, vol. 101, no. 14, 1 octobre 1984 Columbus, Ohio, US; abstract no. 115828x, DENKI KAGAKU KOGYO: "water-reducing agents for concrete" XP000061197 & JP 05 973465 A

## Description

La présente invention concerne l'utilisation d'un agent modificateur pour l'obtention d'un béton ou mortier à retrait limité, avec un ciment sec de type Portland.

De manière générale, pour compenser le retrait des ouvrages ou bâtiments, on utilise habituellement des agents modificateurs qui permettent d'obtenir un procédé expansif des mortiers ou bétons. Parmi ces agents, on peut citer par exemple la poudre d'aluminium micronisée, le carbure de calcium, la chaux vive, l'eau oxygénée, le sulfate de calcium, le sulfo-aluminate de calcium, la poudre de fer. Le gonflement obtenu avec ces agents anti-retrait est de l'ordre de 300 à 800 µm par mètre à 28 jours, le retrait du mélange ciment-agrégats étant du même ordre de grandeur, soit 600 µm par mètre pour un mortier normalisé à 28 jours.

Le retrait en théorie est donc bien compensé, mais dans la réalité, il est très difficile de maîtriser cette expansion ainsi que le moment où celle-ci se produit.

Il apparaissait donc important de disposer d'un agent anti-retrait permettant de maîtriser l'expansion d'un mortier ou béton.

La demanderesse a découvert qu'en utilisant un mélange comprenant en poids de 30 à 80 % de sulfate de calcium, de 36 à 60 % d'un copolymère d'oxyde d'éthylène/propylène, et de 0,5 à 6 % d'un activateur du copolymère, par exemple de l'imidazole, et avec au moins un ciment sec de type Portland, on obtient un béton ou mortier à retrait limité.

Préférentiellement, le sulfate de calcium est anhydre, et/ou le copolymère d'oxyde d'éthylène/propylène est constitué de 60 à 90 % d'oxyde d'éthylène, et/ou l'activateur du copolymère est de l'imidazole. A titre d'exemple, le mélange comprend 51 % de sulfate de calcium, 46 % de copolymère d'oxyde d'éthylène/propylène, et 3 % d'imidazole, ou encore 80 % de sulfate de calcium, 18 % de copolymère d'oxyde d'éthylène/propylène, et 2 % d'imidazole.

A titre d'exemple, le mélange représente de 2 à 10 % en poids, ou de 4 à 6 % en poids du ciment sec de type Portland.

Ce même mélange peut représenter de 0,5 à 2,5 % en poids, ou encore de 0,8 à 1,3 % en poids d'un béton ou mortier prêt à l'emploi.

La présente invention concerne encore l'utilisation d'un mélange tel que défini précédemment, en introduisant ce dernier, soit au moment de la fabrication du ciment de type Portland, soit au moment du malaxage après gâchage de la composition de mortier ou béton, et ce finalement pour fabriquer tous ouvrages ou constructions, dans le domaine du bâtiment, des routes, des aéroports, et par exemple pour fabriquer des mortiers d'étanchéité ou bétons étanches.

Les compositions de mortier ou béton obtenues selon l'invention peuvent comprendre d'autres adjuvants, connus en soi dans le métier, du type cité ci-dessous.

On peut citer par exemple les adjuvants agissant sur le délai de prise et de durcissement, comme notamment les accélérateurs qui raccourcissent le délai entre l'hydratation des liants et leur prise, et les retardateurs qui allongent le délai entre l'hydratation des particules d'un liant et le début de sa prise. En tant qu'accélérateurs, on peut citer par exemple les chlorures de calcium ou de sodium, certains alcalis (soude, potasse, ammoniac) ou leurs sels (sulfate de potasse ou de soude). En tant que retardateurs, on peut citer les hydrates de carbone (sucres, glucose, amidon, cellulose), divers acides ou sels d'acides, ou encore l'oxyde de zinc, ou des phosphates alcalins.

On peut encore citer les adjuvants agissant sur la plasticité et la compacité, tels que les plastifiants, les fluidifiants, dits réducteurs d'eau, les entraîneurs d'air et les épaississants. En tant que plastifiant, on pourra incorporer par exemple de la bentonite, de la chaux grasse, les calcaires broyés, des cendres volantes et le kieselguhr. En tant que fluidifiant, on pourra utiliser le naphtalène sulfonate, les lignosulfates, la mélanine sulfonée, les savons de résines ou détergents de synthèse. En tant qu'entraîneur d'air, on pourra utiliser par exemple des sulfonates, l'abiétate de sodium ou des savons alcalines d'acides gras. En tant qu'épaississant, stabilisant anti-sédimentation, on peut citer la méthylcellulose, les fumées de silice, la caséine stabilisée et les biopolymères.

On peut encore citer les adjuvants améliorant la résistance aux agents externes, tels que les antigels, qui protègent le matériau contre les effets du gel jusqu'au durcissement; les antigélifs, qui protègent les bétons durcis contre les effets du gel; les hydrofuges, qui améliorent l'étanchéité des bétons en réduisant les possibilités de pénétration capillaire de l'eau; les produits de cure, qui évitent l'évaporation prématurée de l'eau de gâchage et maintiennent l'hydratation nécessaire. En tant qu'antigels, on pourra utiliser par exemple le chlorure de calcium, ou l'aluminate de sodium. En tant qu'antigélifs, on pourra utiliser des entraîneurs d'air. En tant qu'hydrofuges, on pourra utiliser des silicones, des fluosilicates, des colloïdes ou des résines. En tant que produits de cure, on pourra par exemple utiliser des émulsions de paraffines, des cires, huiles, résines et divers dérivés pétroliers.

Les adjuvants seront ajoutés en petite proportion et devront être conformes à la norme française NF P 18-103.

Selon la saison et/ou l'éloignement du chantier par rapport au lieu de fabrication, on pourra par exemple ajouter à la composition de mortier ou béton selon l'invention des agents de rhéologie du type superplastifiant et agents anti-sédimentation.

Les compositions de mortier ou béton, afin d'avoir un caractère auto-nivelant, peuvent comprendre en outre un ou des agents plastifiants, fluidifiants, épaississant et/ou entraîneur d'air.

Cette liste n'est pas limitative, et on peut compléter la formulation de la composition de mortier ou béton par des agents d'adhérence et des agents anti-mousse.

Tout mortier obtenu selon la présente invention peut être pompé et s'étale de lui-même. Il suffit de respecter les niveaux à atteindre et d'effectuer une opération de débullage. L'ouvrage de bâtiment ainsi fabriqué, tel que chape, apporte la même facilité de mise en place qu'une chape auto-nivelante de type sulfate de calcium, mais avec une insensibilité à l'eau et une aptitude au collage des carrelages dans des délais très courts. Il est alors possible de couler à l'extérieur, et on obtient une résistance aux remontées d'humidité.

Dans un mode de réalisation préféré selon l'invention, on utilise une composition de mortier ou béton à caractère auto-nivelant selon l'invention, pour la fabrication dans le domaine des sols, et plus particulièrement des chapes.

L'avantage des chapes selon l'invention, fabriquées à partir des compositions de mortier ou béton à caractère auto-nivelant selon l'invention, est qu'il n'existe pas de risque de cristallisation secondaire de nature ettringitique à l'interface chape-carrelage ou chape-support béton. De plus, il n'est pas nécessaire, comme pour la chape à base de sulfate de calcium, d'utiliser des couches de type primaire pour isoler la colle du support coulé.

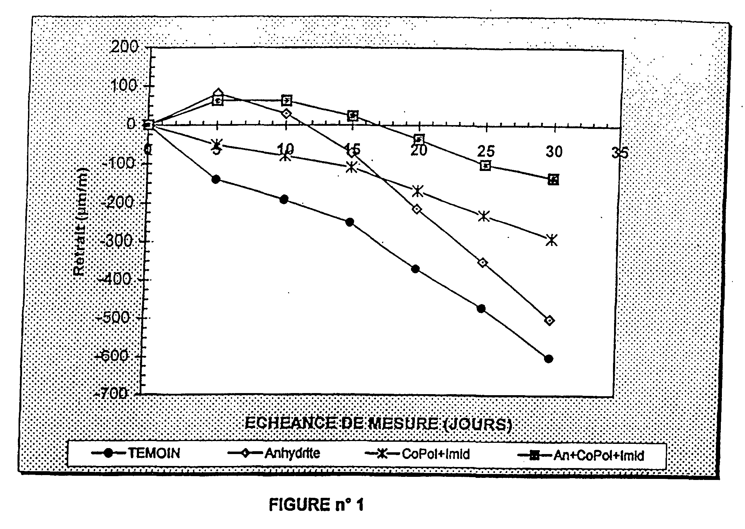

La figure 1 présente le retrait d'un ciment, selon la composition de l'agent anti-retrait dans le ciment de type Portland (68 % de sulfate de calcium, 30 % de copolymère d'éthylène/propylène et 2 % d'imidazole).

Le témoin ne contient pas d'agent anti-retrait.

Anhydrite signifie sulfate de calcium anhydre.

CoPol signifie copolymère d'oxyde d'éthylène/propylène.

Imid signifie imidazole.

Les résultats du retrait, en fonction du ou des ingrédients ou constituants ajoutés, sont donnés dans le tableau suivant.

| Jours | Témoin | Anhydrite | CoPol + Imid | An + CoPol + Imid |
|---|---|---|---|---|
| 0 | 0 | 0 | 0 | 0 |
| 5 | -140 | 82 | -50 | 64 |
| 10 | -190 | 30 | -78 | 64 |
| 15 | -250 | -70 | -108 | 24 |
| 20 | -370 | -214 | -168 | -36 |
| 25 | -470 | -350 | -230 | -100 |
| 30 | -600 | -500 | -290 | -135 |

Il apparaît clairement que la combinaison de sulfate de calcium, de copolymère d'éthylène/propylène et d'imidazole permet d'obtenir un effet synergique sur le retrait du ciment.

Les exemples qui suivent permettent d'illuster l'invention, mais ne constituent en aucune façon une limitation de la portée des revendications jointes.

### METHODOLOGIE D'ESSAIS :

### 1 - Essais de laboratoire :

a) Procédure de malaxage : celle-ci s'effectue conformément aux dispositions de la norme EN 196-1. Les constituants (sable, ciment, additif et eau) sont introduits dans les rapports suivants :
   Rapport Sable/Ciment = 3
   Rapport Agent modificateur/Ciment = 0,053
   Rapport Eau/Ciment (E/C) = 0,50

   A l'issue du cycle normalisé, on introduit l'agent anti-retrait, suivi d'un malaxage à grande vitesse pendant 4 minutes.
b) Mise en place des éprouvettes : le mortier issu du malaxage est mis en place dans les moules de retrait de dimensions 4x4x16 cm ou 7x7x49 cm, équipés de plots de retrait conformément à la norme NF P 15-433. Dans le cas des mortiers auto-nivelants, la mise en place se fait en une seule couche, sans vibration.
c) Conditions de conservation :
   Après malaxage, les moules sont conservés en atmosphère humide à 95 % d'humidité relative et 20°C. A l'échéance de 24 h, les éprouvettes sont ensuite stockées dans l'atmosphère du laboratoire à 20°C et 50 % d'humidité relative jusqu'à l'échéance de 48 heures.
d) Conditions de mesures :
   Pour des raisons de comparaison avec les contrôles de chantiers dont les mesures débutent à l'échéance de 48 h, la mesure initiale des essais de laboratoire s'effectue dans les mêmes conditions.

### 2 - Essais de chantier :

a) Confection des éprouvettes : le mortier issu du malaxage en centrale à béton est mis en place dans les moules de retrait de dimensions 7x7x49 cm ou 7x7x28 cm, équipés de plots de retrait. La mise en place des mortiers auto-nivelants, se fait en une seule couche, sans vibration. Les éprouvettes sont conservées sur le chantier jusqu'à 24 h de durcissement, avec un dispositif prévenant l'évaporation précoce au cours de la prise. A partir de 24 h, les éprouvettes sont déplacées vers le laboratoire de mesures.
b) Conditions de mesure : la mesure initiale s'effectue à l'échéance de 48 h.

On peut atteindre les performances relatives à l'invention par entre autre les exemples suivants de mise en oeuvre.

### Exemple 1 :

Malaxage dans une centrale à béton d'un mortier de composition suivante :

| | |
|---|---|
| Ciment | 450 de CEMII B 32,5 R |
| Sable 0/5 | 1400 kg de sable silico-calcaire |
| Eau | 200 l (rapport E/C = 0,44) |

avec ou sans agent anti-retrait selon l'invention.

L'agent anti-retrait est introduit en fin de séquence de malaxage, avant la vidange dans le camion-toupie. A l'arrivée sur le chantier, pour éviter toute tendance éventuelle à la ségrégation, le camion-toupie pourra effectuer de manière avantageuse une séquence de rotation rapide à raison d'une minute par mètre-cube après ajout éventuel d'un fluidifiant.

La performance anti-retrait s'apprécie en mesurant les variations dimensionnelles des éprouvettes confectionnées selon les dispositions citées dans le paragraphe relatif à la méthodologie d'essai et fabriquées avec :
- d'une part, la formule ci-dessus sans agent anti-retrait : retrait à 28 j > 500 µm/m ;
- d'autre part, la même formule avec 18 Kg d'agent anti-retrait selon l'invention (comprenant 51 % de sulfate de calcium anhydre, 46 % de copolymère d'oxyde d'éthylène/propylène, 3 % d'imidazole): retrait à 28 j < à 150 µm/m.

### Exemple 2 :

Malaxage dans une centrale à béton d'un béton de composition suivante

| | |
|---|---|
| Ciment | 350 kg de CEMII A 42,5 R |
| Sable 0/5 | 800 kg |
| Eau | 180 l |

avec ou sans agent anti-retrait d'hydratation selon l'invention.

L'agent anti-retrait est introduit en fin de séquence de malaxage, avant la vidange dans le camion-toupie. A l'arrivée sur le chantier, pour éviter toute tendance éventuelle à la ségrégation, le camion-toupie pourra effectuer de manière avantageuse une séquence de rotation rapide à raison d'une minute par mètre cube après ajout éventuel d'un fluidifiant.

La performance anti-retrait s'apprécie en mesurant les variations dimensionnelles des éprouvettes confectionnées selon les dispositions citées dans le paragraphe relatif à la méthodologie d'essai et fabriquées avec :
- d'une part, la formule ci-dessus sans agent anti-retrait : retrait à 28 j > 350 µm/m ;
- d'autre part, la même formule avec 20 Kg d'agent anti-retrait selon l'invention (comprenant 80 % de sulfate de calcium anhydre, 18 % de copolymère d'oxyde d'éthylène/propylène, 2 % d'imidazole) : retrait à 28 j < à 150 µm.

### Exemple 3 :

Malaxage dans une centrale à béton d'un mortier auto-nivelant de composition suivante

| | |
|---|---|
| Ciment | 450 kg de CEMII B 32,5 R |
| Sable 0/5 | 1 400 kg |
| Fluidifiant (poudre) | 3 kg de type naphtalène sulfonate |
| Anti-mousse | 100 g de type biopolysaccharide |
| Eau | 280 l |

avec ou sans agent anti-retrait selon l'invention.

L'agent anti-retrait est introduit en fin de séquence de malaxage, avant la vidange dans le camion-toupie. A l'arrivée sur le chantier, pour éviter toute tendance éventuelle à la ségrégation, le camion-toupie pourra effectuer de manière avantageuse une séquence de rotation rapide à raison d'une minute par mètre cube.

L'introduction du fluidifiant s'effectue à l'arrivée sur chantier après le contrôle de la propriété d'étalement du mortier. Mesuré au cône de dimension h = 120 mm/diamètre de base : 133 mm / diamètre haut : 89 mm. L'étalement initial du mortier est de l'ordre de 200 mm. Après introduction du fluidifiant et séquence de rotation rapide, cet étalement est alors de 400 mm, soit un équivalent de 700 mm au cône d'Abrams.

Dans ces conditions, les propriétés de retrait (sur éprouvettes 7x7x49 cm) de cette formule complète et de celle sans agent modificateur sont les suivantes :
- Formule sans agent anti-retrait R(28 jours) > 500 µm
- Formule avec 28 Kg d'agent anti-retrait tel que décrit dans l'exemple 1 R(28 jours) < 150 µm

La résistance à la compression mesurée sur éprouvettes cylindriques 11 x 22 cm est de l'ordre de 23 MPa à 28 jours.

### Exemple 4 :

L'augmentation de l'étendue granulaire et l'incorporation de fibres de polypropylène permettent également d'atteindre les propriétés liées à l'invention, comme le montre l'exemple suivant :

| | |
|---|---|
| Ciment | 400 kg de CEMII A 42,5 R |
| Sable 0/5 | 800 kg de sable silico-calcaire |
| Gravier 5/12 | 800 kg |
| Fluidifiant | 2,7 kg de type mélamine sulfonée |
| Anti-ségrégation | 300 g de type méthylcellulose |
| Anti-mousse | 100 g de type silicone |
| Fibres polypropylène | 1 kg |
| Eau | 190 l |

avec 25 Kg ou sans agent anti-retrait tel que décrit dans l'exemple 2.

Dans ces conditions, les propriétés mesurées sont les suivantes :

| **Eprouvettes 7x7x49 cm** | **Avec agent anti-retrait** | **Sans agent anti-retrait** |
|---|---|---|
| Affaissement initial au cône d'Abrams | 14 - 16 cm | 14 - 16 cm |
| Etalement après fluidification (Cône d'Abrams) | 65 - 70 cm | 65 - 70 cm |
| Retrait à 28 j (50 % HR/20°C) | < 100 µm/m | > 300 µm/m |
| Résistance à la compression (cylindres 11× 22 cm) | 28 - 33 MPa | 28 - 33 Mpa |

## Revendications

1. Utilisation d'un mélange comprenant en poids, de 30 à 80 % de sulfate de calcium, de 3 à 60 % du copolymère d'oxyde d'éthylène/propylène et de 0,5 à 6 % d'un activateur du copolymère, pour l'obtention avec au moins un ciment sec de type Portland, d'un béton ou mortier à retrait limité.

2. Utilisation selon la revendication 1, **caractérisée en ce que** le sulfate de calcium est anhydre, et/ou le copolymère d'oxyde d'éthylène/propylène est constitué de 60 à 90 % d'oxyde d'éthylène, et/ou l'activateur du copolymère est de l'imidazole.

3. Utilisation selon la revendication 2, **caractérisée en ce que** le mélange comprend 51 % de sulfate de calcium, 46 % de copolymère d'oxyde d'éthylène/propylène, et 3 % d'imidazole.

4. Utilisation selon la revendication 2, **caractérisée en ce que** le mélange comprend 80 % de sulfate de calcium, 18 % de copolymère d'oxyde d'éthylène/propylène, et 2 % d'imidazole.

5. Utilisation selon la revendication 1, **caractérisée en ce que** le mélange représente de 2 à 10 % en poids du ciment sec de type Portland.

6. Utilisation selon la revendication 5, **caractérisée en ce que** le mélange représente de 4 à 6% en poids du ciment sec de type Portland.

7. Utilisation selon la revendication 1, **caractérisée en ce que** le mélange représente de 0,5 à 2,5 % en poids d'un béton ou mortier prêt à l'emploi.

8. Utilisation selon la revendication 7, **caractérisée en ce que** le mélange représente de 0,8 à 1,3 % en poids du béton ou mortier prêt à l'emploi.

9. Utilisation selon la revendication 7, **caractérisée en ce que** l'on introduit ledit mélange, soit au moment de la fabrication du ciment de type Portland, soit au moment du malaxage après gâchage de la composition de mortier ou béton.

10. Utilisation selon la revendication 7, pour la fabrication d'ouvrages ou de constructions, dans le domaine du bâtiment, des routes, des aéroports, et par exemple pour la fabrication de mortiers d'étanchéité ou bétons étanches.

11. Utilisation selon la revendication 7, selon laquelle le ciment sec comprend de 1 à 5 % en poids d'un agent fluidifiant.

## Patentansprüche

1. Verwendung einer Mischung, die in Gewichtsanteilen folgendes aufweist, nämlich 30 bis 80 % Calciumsulfat, 3 bis 60% eines Ethylenoxid/Propylen-Copolymeren und 0,5 bis 6 % eines Aktivators des Copolymeren, um mit zumindest einem Trockenzement vom Typ Portland einen Beton oder einen Mörtel mit begrenzter Schwindung zu erhalten.

2. Verwendung nach Anspruch 1, **dadurch gekennzeichnet, daß** das Calciumsulfat anhydridisch ist, und/oder das Ethylenoxid/Propylen-Copolymer aus 60 bis 90 % Ethylenoxid gebildet ist, und/oder der Aktivator des Copolymeren Imidazol ist.

3. Verwendung nach Anspruch 2, **dadurch gekennzeichnet, daß** die Mischung 51 % Calciumsulfat, 46 % Ethylenoxid/Propylen-Copolymer und 3 % Imidazol enthält.

4. Verwendung nach Anspruch 2, **dadurch gekennzeichnet, daß** die Mischung 80 % Calciumsulfat, 18 % Ethylenoxid/Propylen-Copolymer und 2 % Imidazol enthält.

5. Verwendung nach Anspruch 1, **dadurch gekennzeichnet, daß** die Mischung 2 bis 10 Gew.-% des Trockenzements vom Typ Portland darstellt.

6. Verwendung nach Anspruch 5, **dadurch gekennzeichnet, daß** die Mischung 4 bis 6 Gew.-% des Trockenzements vom Typ Portland darstellt.

7. Verwendung nach Anspruch 1, **dadurch gekennzeichnet, daß** die Mischung 0,5 bis 2,5 Gew.-% eines gebrauchsfertigen Betons bzw. Mörtels darstellt.

8. Verwendung nach Anspruch 7, **dadurch gekennzeichnet, daß** die Mischung 0,8 bis 1,3 Gew.-% des gebrauchsfertigen Betons bzw. Mörtels darstellt.

9. Verwendung nach Anspruch 7, **dadurch gekennzeichnet, daß** man die Mischung entweder zum Zeitpunkt der Herstellung des Zementes vom Typ Portland oder zum Zeitpunkt des Knetens nach Anrühren der Zusammensetzung des Mörtels oder Betons einführt.

10. Verwendung nach Anspruch 7 zur Herstellung von Bauwerken oder Baukonstruktionen auf dem Gebiet der Gebäude, der Straßen, der Flughäfen und bspw. zur Herstellung von dichten Mörteln oder dichten Betons.

11. Verwendung nach Anspruch 7, bei der der Trockenzement 1 bis 5 Gew.-% eines Verflüssigungsmittels aufweist.

## Claims

1. Use of a mix comprising, by weight, from 30 to 80% of calcium sulfate, from 3 to 60% of ethylene oxide/propylene copolymer and from 0.5 to 6% of a copolymer activator, in order to obtain, at least with a Portland-type dry cement, a concrete or mortar with limited shrinkage.

2. Use according to Claim 1, **characterized in that** the calcium sulfate is anhydrous and/or the ethylene oxide/propylene copolymer contains from 60 to 90% of ethylene oxide and/or the activator for the copolymer is imidazole.

3. Use according to Claim 2, **characterized in that** the mix comprises 51% of calcium sulfate, 46% of ethylene oxide/propylene copolymer and 3% of imidazole.

4. Use according to Claim 2, **characterized in that** the mix comprises 80% of calcium sulfate, 18% of ethylene oxide/propylene copolymer and 2% of imidazole.

5. Use according to Claim 1, **characterized in that** the mix represents from 2 to 10% by weight of the Portland-type dry cement.

6. Use according to Claim 5, **characterized in that** the mix represents from 4 to 6% by weight of the Portland-type dry cement.

7. Use according to Claim 1, **characterized in that** the mix represents from 0.5 to 2.5% by weight of a ready-to-use concrete or mortar.

8. Use according to Claim 7, **characterized in that** the mix represents from 0.8 to 1.3% by weight of the ready-to-use concrete or mortar.

9. Use according to Claim 7, **characterized in that** the said mix is introduced either during the manufacture of the Portland-type cement or during the mixing, after the mortar or concrete composition has been mixed.

10. Use according to Claim 7, for the production of works, or of constructions, in the field of buildings, roads, airports, and for example for the manufacture of waterproofing mortars or impermeable concretes.

11. Use according to Claim 7, according to which the dry cement comprises from 1 to 5% by weight of a thinning agent.
